# EUROPÄISCHE PATENTANMELDUNG

(11) **EP 0 838 364 A2**
(43) Veröffentlichungstag der Anmeldung: **29.04.1998**
(21) Anmeldenummer: 97113736.9
(22) Anmeldetag: 08.08.1997
(51) Int. Cl.: B60N 3/08

(54) **Behältnis zur Aufnahme von Gegenständen in einem Kraftfahrzeug**

(30) Priorität: 22.10.1996 DE 29618336 U
(71) Anmelder: Dr.Ing.h.c. F. Porsche Aktiengesellschaft, 70435 Stuttgart (DE)
(72) Erfinder: Hübert, Klaus, 71711 Steinheim (DE)

(57) **Zusammenfassung**

Ein Behältnis zur Aufnahme von Gegenständen ist in einem Kraftfahrzeug an einem Armaturenbrett angeordnet und ist mit einem Aschenbecher im Bereich des Armaturenbrettes lösbar verbunden. Am Behältnis sind längsverlaufende Rastnuten eingelassen, deren Ränder eine Abdeckung des Aschenbechers übergreifen.

## Beschreibung

Die Erfindung bezieht sich auf ein Behältnis zur Aufnahme von Gegenständen in einem Kraftfahrzeug.

Insbesondere bei Sportfahrzeugen besteht aufgrund des begrenzten Platzangebots im Bereich des Armaturenbrettes meist keine oder nur eine sehr geringe Möglichkeit eine Ablage unterzubringen, zumal ein Beifahrerairbag sowie die Bedien- und Anzeigeelemente und Zusatzeinrichtungen, wie beispielsweise ein Radio, kein Raum für eine Ablage am Armutrenbrett mehr freilassen.

Aufgabe der Erfindung ist es, im Bereich des Armaturenbrettes eine zusätzlich Ablage zu schaffen, welche für den Fahrer gut zugänglich ist.

Diese Aufgabe wird erfindungsgemäß durch die kennzeichnenden Merkmale des Anspruchs 1 gelöst. Weitere vorteilhatte Merkmale beinhalten die Unteransprüche.

Die mit der Erfindung hauptsächlich erzielten Vorteile bestehen darin, daß das Behältnis in einfacher Weise mit dem Aschenbecher verbindbar und mit diesem verschwenkbar ist, und sowohl bei geöffnter Stellung als auch bei geschlossener Stellung des Aschenbechers gut zugänglich ist.

Die Verbindung mit dem Aschenbecher erfolgt mittels eines Aufschiebens auf eine Aschenbecherabdeckung bzw. auf den Aschenbecher selbst. Hierzu sind innenseitig des Behältnisses längsverlaufende und im Querschnitt etwa dreieckförmig ausgebildete Längsnuten angeordnet, welche Seitenränder der Abdeckung haltend aufnehmen. Ein Ausbau des Aschenbechers ist zum Aufschieben des Behältnisses nicht unbedingt erforderlich.

Das Behältnis ist mit einem Boden und Seitenwänden sowie einer unteren Abschlußwand versehen, wobei die dem Boden gegenüberliegende Oberseite offen ist und im zusammengebauten Zustand als Begrenzung die Abdeckung des Aschenbechers aufweist.

Stirnseitig ist das Behältnis geöffnet und eine Unterteilung erfolgt über eine längsverlaufende Trennwand, wodurch eine geordnete Aufnahme von Gegenständen erfolgen kann.

Die Randkanten des Behältnisses sind vorzugsweise der nach außen gewölbten Form der Abdeckung angepaßt, so daß eine dichte Anlage gewährleistet ist.

Das Behältnis besteht vorzugsweise aus einem Kunststoffmaterial und kann eine Farbgebung entsprechend der Farbe des Armaturenbrettes aufweisen, bzw. auch einen Lederbezug besitzen. Denkbar sind auch Behältnisse in einem durchsichtigten Kunststoffmaterial.

Ein Ausführungsbeispiel der Erfindung ist in der Zeichnung dargestellt und wird im folgenden näher beschrieben.

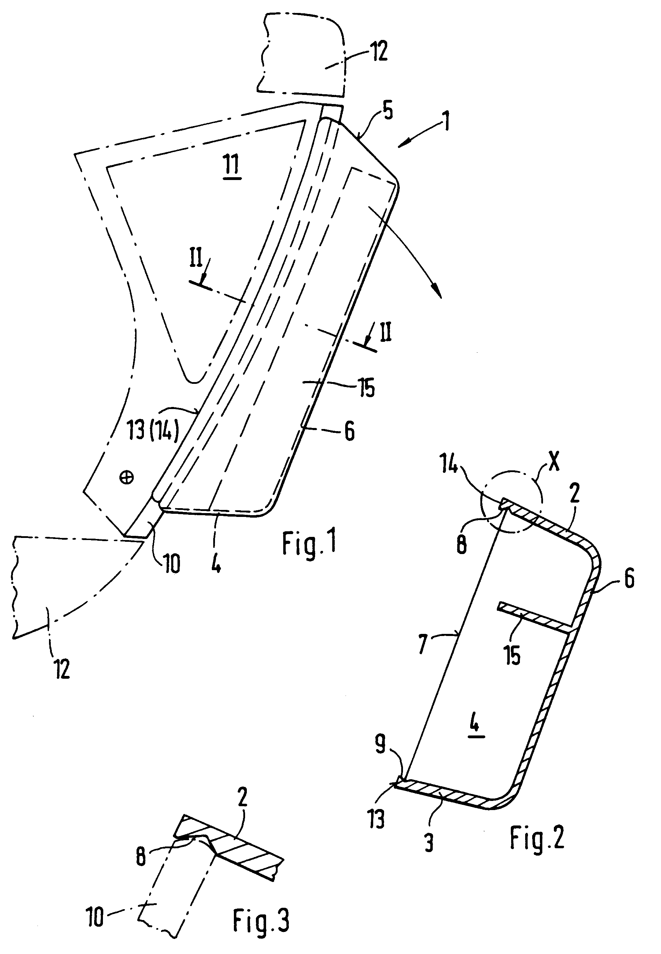

Es zeigen
- Fig. 1: eine Ansicht auf ein mit einer Abdeckung eines Aschenbechers verbundenen Behältnisses in einer geschlossenen Stellung des Aschenbechers,
- Fig. 2: einen Teilschnitt des Behältnisses und
- Fig. 3: eine vergrößerte Darstellung der Einzelheit X, welche die längsverlaufende Rastnut in der Seitenwand des Behältnisses darstellt.

Das Behältnis 1 besteht im wesentlichen aus einer im Querschnitt U-förmigen Schale mit Seitenwänden 2, 3, einer unteren Abschlußwand 4 sowie einer oberen Stirnöffnung 5. Dem Boden 6 liegt eine offene Oberseite 7 gegenüber.

In den Seitenwänden 2, 3 des Behältnisses 1 sind längsverlaufende Rastnuten 8, 9, die im Querschnitt etwa dreieckförmig ausgeformt sind, vorgesehen, die eine Abdeckung 10 eines Aschenbechers 11 zwischen sich aufnehmen. Diese Rastnuten 8, 9 sind nahe den Rändern der Seitenwände eingeformt. Das Behältnis 1 wird vorgespannt gehalten, so daß ein Abfallen auch bei starken Erschütterungen nicht erfolgen kann.

Der Aschenbecher 11 ist im Armaturenbrett 12 über die Abdeckung 10 bündig mit der Außenfläche angeordnet und um eine Drechachse verschwenkbar. Auf der Abdeckung 10 ist das Behältnis 1 mittels der Rastnuten 8, 9 aufschiebbar und bildet eine Einheit mit dem Aschenbecher 11 und ist mit dem Aschenbecher in Pfeilrichtung verschwenkbar, wobei der Aschenbecher eine geschlossene und geöffnete Stellung einnehmen kann. In beiden Positionen ist das Behältnis gut zugänglich und es sind Gegenstände einsteckbar und herausnehmbar.

Die Konturen der Kanten 13, 14 des Behältnisses 1 sind der Kontur der Abdeckung 10 im Formverlauf angepaßt, so daß ein unmittelbares Anliegen an der Oberfläche des Armaturenbrettes gewährleistet ist.

Die Seitenwände 2 und 3 des Behältnisses 1 weisen im wesentlichen eine Trapezform auf. Eine Unterteilung des Behältnisses 1 erfolgt über eine längsverlaufende Wand 15, welche an der Abdeckung 10 anstoßen kann.

Das Behältnis 1 kann bei Nichtgebrauch auch von der Abdeckung 10 des Aschenbechers abgezogen werden, so daß je nach Verwendungszweck und Bedarf ein Aufschieben auf die Abdeckung 10 erfolgen kann.

## Patentansprüche

1. Behältnis zur Aufnahme von Gegenständen in einem Kraftfahrzeug an einem Armaturenbrett, dadurch gekennzeichnet, daß das Behältnis (1) mit einem Aschenbecher (11) im Bereich des Armaturenbrettes (12) lösbar verbunden ist und daß am Behältnis (1) längsverlaufende Rastnuten (8, 9) eingelassen sind, die Ränder (13, 14) einer Abdeckung (10) des Aschenbechers (11) übergreifen.

2. Behältnis nach Anspruch 1, dadurch gekennzeichnet, daß die längsverlaufenden Rastnuten (8, 9) im Querschnitt eine etwa dreieckförmige Einkerbung aufweisen, in welchen die Ränder der Abdeckung (10) haltend aufgenommen sind.

3. Behältnis nach den Ansprüchen 1 oder 2, dadurch gekennzeichnet, daß die Rastnuten (8, 9) durchgehend im Behältnis (1) angeordnet sind.

4. Behältnis nach den Ansprüchen 1, 2 oder 3, dadurch gekennzeichnet, daß das Behältnis (1) im Querschnitt U-förmig ausgebildet ist, eine nach oben hin offene Schale bildet, die eine untere Abschlußwand (4) und eine gegenüberliegende Stirnöffnung (5) zum Einführen von Gegenständen besitzt.

5. Behältnis nach einem oder mehreren der vorhergehenden Ansprüche, dadurch gekennzeichnet, daß das Behältnis (1) Seitenwände (2, 3) aufweist, die annähernd die Form eines Trapezes aufweisen.

6. Behältnis nach einem oder mehreren der vorhergehenden Ansprüche, dadurch gekennzeichnet, daß das Behältnis eine längsverlaufende Unterteilungswand (15) besitzt.

7. Behältnis nach einem oder mehreren der vorhergehenden Ansprüche, dadurch gekennzeichnet, daß die Längskanten (13, 14) des Behältnisses (1) sowie die längsverlaufenden Rastnuten (8, 9) einen entsprechenden Verlauf der nach außen gewölbten Abdeckung (10) aufweist.

8. Behältnis nach einem oder mehreren der vorhergehenden Ansprüche, dadurch gekennzeichnet, daß das Behältnis (1) mit einem Lederbezug versehen ist.

9. Behältnis nach einem oder mehreren der vorhergehenden Ansprüche, dadurch gekennzeichnet, daß das Behältnis (1) aus einem durchsichtigen Kunststoff besteht.
